Europäisches Patentamt

(19) European Patent Office

Office européen des brevets

(11) Publication number: **0 149 474**
**B1**

(12) **EUROPEAN PATENT SPECIFICATION**

(45) Date of publication of patent specification: **07.01.88**

(51) Int. Cl.⁴: **F 23 R 3/00**, F 02 C 7/30

(21) Application number: **85100214.7**

(22) Date of filing: **11.01.85**

(54) Combustion apparatus for gas turbine.

(30) Priority: **13.01.84 JP 3474/84**

(43) Date of publication of application:
**24.07.85 Bulletin 85/30**

(45) Publication of the grant of the patent:
**07.01.88 Bulletin 88/01**

(84) Designated Contracting States:
**CH DE FR GB LI**

(56) References cited:
**AU-B- 533 531**
**FR-A-1 046 251**
**FR-A-2 323 656**
**GB-A- 722 121**
**US-A-2 564 497**
**US-A-3 764 279**
**US-A-4 255 495**
**US-H- 377 172**

**THIN SOLID FILMS, vol. 53, no. 2, 1978, pages
225-232, Elsevier Sequoia S.A., Lausanne, CH;
P. BECHER et al.: "Factors in the degradation of
ceramic coatings for turbine alloys"**

(73) Proprietor: **HITACHI, LTD.**
**6, Kanda Surugadai 4-chome Chiyoda-ku
Tokyo 100 (JP)**

(72) Inventor: **Iizuka, Nobuyuki**
**10-25, Higashitagacho-4-chome
Hitachi-shi (JP)**
Inventor: **Hirose, Fumiyuki**
**5-3-204, Nishinarusawacho-1-chome
Hitachi-shi (JP)**
Inventor: **Asahi, Naotatsu**
**16-19, Higashioshima-3-chome
Katsuta-shi (JP)**
Inventor: **Kojima, Yoshitaka**
**12-3-2, Kokubuncho-2-chome
Hitachi-shi (JP)**

(74) Representative: **Patentanwälte Beetz sen. -
Beetz jun. Timpe - Siegfried - Schmitt-Fumian
Steinsdorfstrasse 10
D-8000 München 22 (DE)**

(56) References cited:
**AMERICAN CERAMIC STY BULLETIN, vol. 60,
no. 8, 1981, pages 807-811, Columbus, Ohio,
US; A.S. GROT et al.: "Behavior of plasma-
sprayed ceramic thermal-barrier coatings for
gas turbine applications"**

Courier Press, Leamington Spa, England.

# 0 149 474

**Description**

The present invention relates to a combustion apparatus of the kind referred to in the pre-characterizing portion of patent claim 1. Such a combustion apparatus is known from US—A—2 564 497.

In gas turbine apparatus for use in electric power plants, there is a demand for reducing air pollution, that harmful components contained in exhaust gas must be reduced as much as possible. It has been proposed to inject water or steam into the combustion chamber to reduce nitrogen oxides which are harmful components contained in the exhaust gas, i.e., so-called NOx. This is applicable to reducing NOx.

In the combustion apparatus where water or steam is injected for the purpose of reducing NOx, various problems arise in comparison with the case where no water injection is provided.

A nozzle for water injection is constructed in combination with a burner for normally feeding fuel. A problem accompanied by the water injection appears at a liner cap member connecting the burner and a combustion apparatus liner body. More specifically, water spray is inherently introduced into the combustion gas, but a part of the water spray enters into the combustion gas via a spacing and holes formed in the linear cap member for cooling air. The introduction of water through the air cooling hole largely affects the liner cap member, causing the durability of the liner cap member to be reduced. Namely, when water drops of the water injection are adhered to metal members which are subjected to direct radiation heat of combustion flame, the metal members are locally subjected to very large thermal stress, causing cracks to be produced.

From US—A—2 564 497 a combustion apparatus is known having a structure in which a ceramic coating layer is applied on a side of base material which is in contact with a flame and a gassy layer is provided on the opposite surface thereof. Since the surface facing the flame and the opposite surface of the base material are both coated with the glassy or ceramic layers, radiation of emission of heat from the base material deteriorates the combustion apparatus. Further, if the glassy layer is subjected to water injection for the purpose of reducing the generation of NOx fine cracks will tend to be generated, resulting in a peeling of said layer.

GB—A—722 121 shows a composite material in which a good heat conductive layer made of copper, silver or the like is formed on a base material, such as a Ni-Cr alloy, and further a thin oxidation preventing layer made of a Ni-Cr alloy is applied thereon. Copper or silver is used in order to enhance the heat radiation or emission and the oxidation preventing layer is covering and protecting said base layer from being oxidized in the high temperature ambient atmosphere.

An object of the present invention is to improve a combustion apparatus of the kind referred to in the pre-characterizing portion of claim 1 in that its service life is prolongated by preventing any crack generation.

According to the invention this object is solved by a combustion apparatus of the kind referred to in the pre-characterizing portion of patent claim 1 comprising the feature of the characterizing clause of claim 1.

The present inventors have studied various aspects of a liner cap having a structure such that the even if water from the water injection nozzle is adhered to the liner cap, a thermal stress is hardly generated in the liner cap, that is, a local temperature elevation hardly occurs. As a result, it has been found that it is possible to prevent the following local problems: 1) heat transfer from combustion gas flame to a member; 2) change in temperature gradient caused by the water collision against the member kept at a high temperature; and 3) generation of heat resistance against the cooling effect due to a change in surface condition of the member. Then, it has been found that any of such problems may be solved by applying a surface treatment to a liner cap member. Namely, it has been experimentally confirmed that a crack of the combustion apparatus is generated not only by simple abrupt cooling due to the water injection, but also by cooling with water in the case where the members are locally exessively heated. Thus, the present inventors have found that a crack is prevented from being generated by eliminating the local excessive heat transfer rate.

Fig. 1 is a cross-sectional view of a combustion apparatus;

Fig. 2 is a cross-sectional view of a liner cap portion of a combustion apparatus to which the present invention is applied;

Fig. 3 is an enlarged cross-sectional view of a part III of Fig. 2;

Fig. 4 is a frontal view as seen from the direction IV shown in Fig. 2;

Fig. 5 is an enlarged view of a part D of Fig. 4;

Figs. 6 and 7 show temperature distributions in the cross-section of the liner cap wall surface; and

Figs. 8 through 10 are graphs showing temperature characteristics.

Detailed Description of the Invention

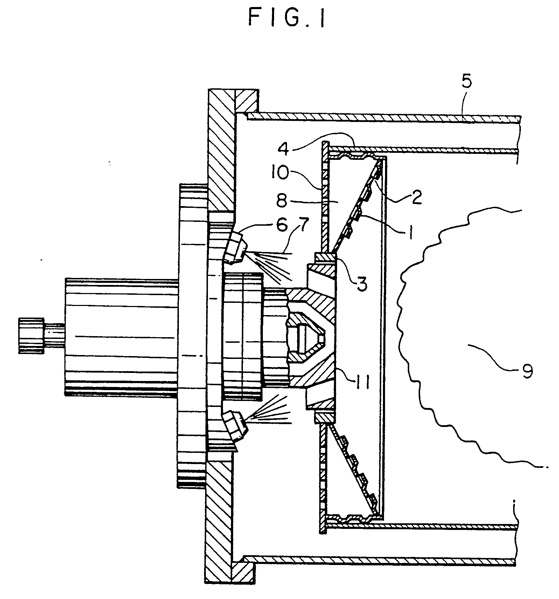

Referring now to Fig. 1, a cause will hereinafter be explained in which a crack is likely to be generated in a metallic member of a liner cap 10 of a combustion apparatus.

In Fig. 1, a cone 1 is not directly contacted with a combustion flame 9 but is heated at a high temperature by radiation of the combustion flame 9. A number of small holes 2 for cooling are formed in the cone 1 so that an air cooling effect will be generated by the air flow introduced through the small holes 2. A fuel burner 11 is inserted into a collar 3 and a cap ring 4 is inserted into a liner sleeve body 5. However, in the case where the fuel burner 11 provided with water spray nozzles 6 is used, water 7 to be inherently introduced directly to the combustion flame 9 is frequently introduced into the combustion flame 9 through a spacing 8 and the small holes 2. Also, this phenomenon is not uniformly generated along a circumferential direction of the liner cap 10 but tends to be locally generated. Therefore, in the liner cap 10 where such a phenomenon is generated, there is an influence of the water to be introduced from the water spray nozzles 6, as well as the temperature elevation caused by radiation heat from the combustion gas flame 9 and the cooling effect caused by the cooling air. The liner cap 10 is inherently constructed so that a suitable temperature condition may be kept by a balance between the radiation heat from the flame and the cooling air. However, such a temperature balance of the liner cap 10 will be remarkably broken by the introduction of the water from the water spray nozzles 6. Namely, the water collides with and temporarily adheres to the liner cap 10 which is kept at a suitable temperature balance, so that a temperature thereat is abruptly decreased. Also, in the case where the water collides only with some specific parts in the circumferential direction of the liner cap 10, a temperature thereat is considerably decreased in comparison with the other parts. Such temporary temperature drop or local temperature drop would cause a thermal stress to be produced in the components forming the liner cap 10. In particular, the generation of such a thermal stress is remarkable at the cone 1 to which the radiation from the combustion flame is directly applied. Also, the cone 1 is likely to be subjected to a stress concentration because of the provision of a number of the small holes 2 for air cooling. Damages such as cracks are likely to be generated in a corrosion resisting member constituting the liner cap due to the thermal stress in the vicinity of opening edges of the small holes. If such damages are remarkable, the liner cap per se is broken down, and then broken pieces are diffused to cause serious damages to be generated in blades and nozzles positioned downstream of the liner of the combustion apparatus. For instance, as a conventional method of preventing the damages of the liner cap due to the thermal stress, the water spray nozzles are improved or the shape of the opening edges of the cooling small holes is improved. However, according to any of the conventional methods, a satisfactory result cannot be obtained due to the complicated structure or shape of the liner cap.

Namely, as described above, a problem in structure of the conventional low NOx type water spray combustion apparatus is caused by the influence of the water mixed from the water spray nozzle. In other words, in the case where the water is abruptly collided with a part of the liner cap which is contact with the combustion gas and heated at a high temperature, or in the case where the above described phenomenon is locally generated in the liner cap, a temperature gradient is generated in metallic members constituting the liner cap, thereby causing a thermal stress. The part, of the liner cap, in contact with the combustion gas is provided with a number of the small holes for air cooling and is likely to be subjected to a stress concentration. Therefore, if the thermal stress is generated in the metallic members, then a remarkable stress concentration will be generated in the metallic members. If the stress concentration exceeds a mechanical strength limit of the material of the members, then the members will be broken down. In additon thereto, the following should be noted: a high temperature oxidation of the liner cap member due to the influence of the water mixed from the water spray nozzles; and a generation of the thermal resistance against the cooling effects of the member with the cooling air, due to the deterioration of the surface condition of the member to which an impurity in the water is struck. Thus, the cooling effect will be decreased so that a temperature of the member will be increased. If the mixture of the water from the water spray nozzles is concentrated locally on the liner cap, the above-described phenomenon of the generation of the thermal resistance against the cooling effect will cause the temperature of the member to be locally increased, to generate a thermal stress in the member. On the other hand, the water from the water spray nozzles is introduced into the combustion gas from the cooling air introduction holes, contacting with the combustion gas, of the liner cap, an amount of the introduced air from the cooling air introduction holes is decreased, to change an air/fuel ratio of the gas combustion, so that the combustion flame approaches a surface of the liner cap. If the phenomenon of the influence of the water mixture is generated locally at a restricted part of the number of cooling air introduction holes, a change of the combustion condition is also locally generated so that the liner cap is locally heated to a higher temperature to cause a thermal stress in the member. As described above, in any case, the influence of the water mixed from the water spray nozzles leads to the generation of the thermal stress in the member so that the member will be damaged where the stress concentration is generated. Accordingly, it is most preferable to avoid the generaton of the thermal stress in the liner cap as a method for preventing the damge of the liner cap of the low NOx type combustion apparatus using the water spray nozzles. As to a method of preventing the thermal stress, a structure of the water spray nozzles or the liner cap may be improved but it is very difficult to solve various problems with such a method because of the flow of the cooling air, the influence of the combustion gas and the like.

According to the present invention, in a combustion apparatus for a gas turbine, a part (the cone 1 in Fig. 1) which is most likely to be damaged in contact with the combustion gas is subjected to a surface treatment. In general, as to a member used under a high temperature condition in a high temperature gas turbine or the like, a ceramic coating is carried out as a method of preventing the temperature of the member from being increased. Such a ceramic coating is carried out on gas turbine members such as a combustion chamber liner body, blades, nozzles and the like. If any of the members, the ceramic coating is applied thereto as a method for compensating for a part where the cooling effect by the air is insufficient and for decreasing the temperature of the material per se forming the member. Such a coating is so called heat shielding coating and is mainly composed $ZrO_2$ system material. In a normal combustion apparatus liner without any water spray, a temperature of the liner cap per se is low at 400 to 500°C which is lower than a durable temperature (about 700 to 800°C) of the material forming the member, and hence, a special surface treatment such as heat shielding coating is not applied. Thus, no surface treatment has been applied to the liner cap. Also, the ceramic coating applied to the combustion chamber liner, the blades, the nozzles and the like is used for compensating for the insufficient air cooling effect. Such a conventional ceramic coating has not been applied in the case of the water mixture. Also, there has not been an example for testifying an effect of the coating under the condition of the water mixture. Rather than such an effect, it has been considered that the ceramic coating is undesirable in the part where the water is mixed, in view of the enhancement of a durability of the ceramic coating. Under such a technical background, the present inventors have conducted various tests and studies as to liner caps to which various coatings including the conventional coating are applied, and have found a structure of a liner cap for a low NOx type combustion apparatus provided with water spray nozzles, which is superior in durability as described below. The main conditions met by the surface treatment layer of the liner cap for the combustion apparatus in accordance with the present invention are: (i) prevention of the local temperature elevation in a member due to the heat introduction from the combustion gas flame; and (ii) reduction of the thermal shock to the member due to the collision of water mixed from the water spray nozzles. The condition (i) should be met by a part (combustion side surface), contacting with the combustion gas, of the liner cap and the condition (ii) should be met by an opposite liner cap surface contacting with the combustion gas (cooling side surface). Accordingly, the structure of the cap in accordance with the present invention is characterized in that the surface treatments meeting the above-described requirements (i) and (ii) are applied to both the combustion side surface and the cooling side surface. Namely, it is a feature of the present invention that when a rapid thermal change from the outside is applied to a member kept at an equilibrium temperature under the condition that no introduction of water from water spray nozzles is present, such an influence is suppressed and the temperature on the equilibrium of the member is not rapidly changed. It is possible to realize the suppression effect of the temperature change of the member due to the thermal change from the outside by forming a coating of material having a low heat conductivity so as to reduce a thermal diffusion in the thickness direction of the coating to reduce the amount of the introduced heat to the member with the temperature of the coating per se being elevated. Such a structure is effective also in suppressing the thermal change of the member in case that the combustion gas flame or the like approaches the member considerably or abnormally in comparison with the normal combustion position. On the other hand, a coating of a material having a high heat conductivity is formed on the opposite side surface of the member, so that the heat diffusion is accelerated in the lateral direction in the coating as well as the thickness direction of the coating, thereby preventing a local cooling of the member. Such coatings are available as a method for suppressing the thermal change of the member, for example, in case that water is abruptly locally collided with the member. Namely, the former suppression effect is effective in the combustion side surface of the liner cap and the latter suppression effect is effective in the cooling side surface.

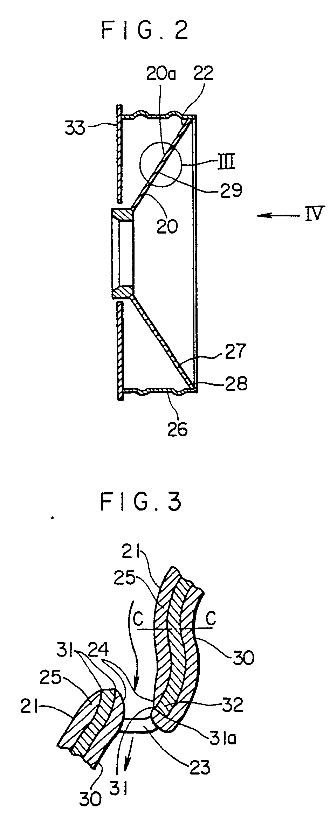

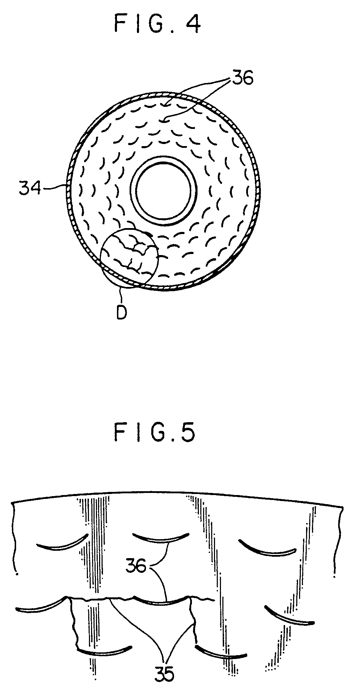

As a liner cap for a low NOx type combustion liner as shown in Fig. 2, a liner cap 33 having a structure in accordance with the present invention was produced in accordance with a method-described below. The liner cap 33 was made an alloy commercialized under the name of Hastelloys-X or the like. In the liner cap 33 having a form as shown in Fig. 2, a coating 21 made of alloy material as shown in Fig. 3 was formed on the entire surface of a cooling side surface 20a, of a cone 20, to be exposed in the combustion gas flame. The coating 21 was formed by a plasma spray welding method. The detail of the formation of the coating was as follows. First of all, prior to carrying out the spray welding, as a pre-treatment, a part to which the spray welding was to be applied was cleaned with solvent to remove oil components therefrom. Thereafter, a glass type having adhesives was attached to a part 22 to which a welding work was to be applied in a later process, and further, a silicone rubber was applied thereto from above. Such a masking process for avoiding the influence of the spray welding was carried out. Thereafter, a blast process was applied to the part to be welded, thereby removing the oxide coating or the like from the surface of the member to clean the surface, and further, the surface was roughed. The blast condition was such that alumina grit having a diameter of about 0.7 mm was used and a pressure of air for spraying the grit was about 5 $Kg/cm^2$ (490 kPa). Incidentally, as the blast process for the cooling air small holes 23 shown in Fig. 3, a blast was applied up to inner portions 24 shown in the enlarged cross-sectional view of the small hole 23 of Fig. 3. Immediately thereafter, a corrosion resistant alloy material 25 was spray welded. The alloy material for spray welding was composed of 32% No, 21% Cr, 8% Al, 0.5% Y and the remainder of Co. The powder or granule diameter thereof was in the range of 10 to 44 µm. Incidentally, prior to the spray welding, the member was preheated by using a plasma arc, and then, the spray welding was started in the range of 120 to 160°C of the preheating temperature. The spray welding condition was such that an Ar-$H_2$ mixture gas plasma was used and an output of the plasma arc was at 40 kW. The member was mounted on a rotary jig and was rotated at a constant velocity. The number of the spray weldings, a pressure of air for purge or the like was selected so that the temperature of the member upon completion of the spray welding was not greater than 180°C. Such a temperature control of the member was able to form the coating 21 having a desired contacting force. A thickness of the coating 21 was about 0.2 mm and an accuracy thereof was ±20 µm. Also, the cooling air small holes 23 as shown in Fig. 3 were spray welded by setting an angle of a plasma torch. It is important to spray weld the cooling air small holes 23 as well as the other parts in order to prevent an effective area of air blow through the cooling holes from being decreased due to the oxidation thereof or the like. Incidentally, the thickness of the spray welded layer on the parts around the small holes would cause a problem in manufacturing and would tend to be about 50% of that on the other parts. Thus, the coating 21 made of alloy material with excellent oxidation resistant characteristics at high temperature and corrosion resistant characteristics at high temperature was formed on the allover surface on the cooling side. Then, as shown in Fig. 2, a cap ring 26 and a cap cone 27 were connected by welding to each other, and thereoafter, the welding melting process was applied to the members. Subsequently a coating 30 of $ZrO_2$ system material was formed on a combustion side surface 29 of the thus produced liner cap. Also in this process, the plasma spray welding method was used as a forming method, and the same pre-treatment as in the cooling side surface 20a was carried out. The coating 30 was made of $ZrO_2$ system material consisting of $ZrO_2$—8% $Y_2O_2$. Prior the the spray welding of $ZrO_2$ system material, a spray weld layer of Co-Ni-Cr-Al-Y alloy consisting of the above-described alloy compositions was formed to enhance the coupling force between the spray weld layer of $ZrO_2$ system material and the member. The spray welding conditions of such a coupling layer were substantially the same as those of the above-described cooling side surface. The thickness of the coupling layer was 0.1 ± 0.02 mm. The spray welding condition was substantially the same as that of the alloy layer which was the coupling layer but the plasma output thereof was 55 kW. Also, the preheated temperature of the member was 120 to 160°C and the temperature after the completion of the spray welding was not greater than 220°C, as the spray welding condition. With such a spray welding meeting the welding condition, the spray weld layer of $ZrO_2$ system material having an excellent contactability with the member was able to be formed. A thickness of the spray weld layer of $ZrO_2$ system material was 0.2 ± 0.02 mm. Incidentally, upon manufacturing the liner cap, is was important to set the effective area of the cooling air small holes 23 shown in Fig. 3, in advance in view of the thickness of the coating formed on the member, in order to keep the originally designed air flow amount. As a treatment of corner portions 31 of the small holes 23, the thickness of the coating was zero at the corner portions and gradually increased up to a predetermined thickness. However, at a corner portion 31a the coating was formed also along the plate thickness direction of the cone base member 32 in consideration of peeling of the coating. The thus produced liner cap 33 was incorporated into a low NOx type combustion apparatus liner and a working test of the actual gas turbine was conducted. Incidentally, for comparison, a liner cap 34 having a conventional structure was tested under like working condition. The working period of time was about 1,000 hours and meanwhile about 60 starts and stops were repeated. As a result of the observation of the appearance of the liner cap after the test, in the liner cap having the conventional structure, it was found that cracks 35 were generated between the cooling air small holes 36 as shown in Figs. 4 and 5. On the other hand, in the liner cap having a structure in accordance with the present invention, there was not any damage such as crack of the member, and even with the observation after removing the coating of the combustion side surface by the blast treatment, there was no damage in the member. Thus, it was found that the liner cap in accordance with the present invention was much superior in durability.

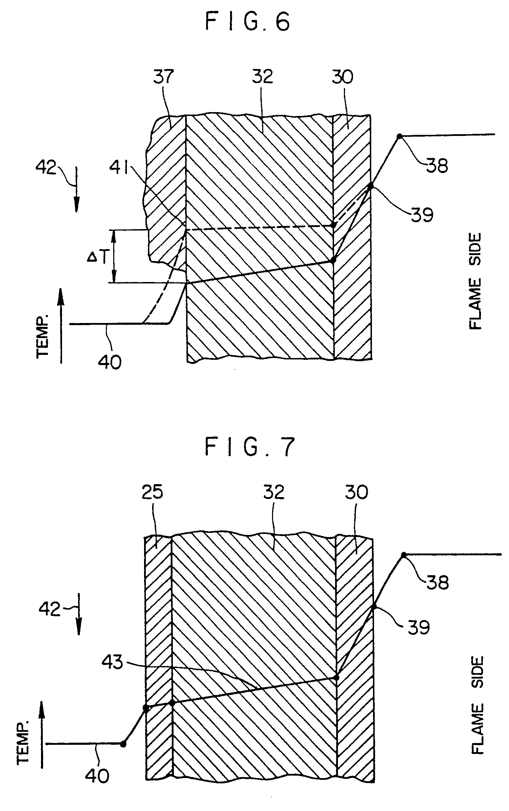

The advantage and effect of the present invention will now be explained with reference to temperature diagrams. Figs. 6 and 7 show the temperature distribution of each part corresponding to the cross section taken along the line C—C of Fig. 3.

Fig. 6 shows a state in which a ceramic coating 30 was provided on the flame side alone and an oxidized film 37 was applied locally to the opposite side.

In Fig. 6, where no oxidized film is provided on the cooling side surface of the base 32, the temperature distribution at each part is such that the combustion gas temperature 38 becomes somewhat lower temperature 39 as indicated by solid lines, the temperature was rather lowered within the coating 30 because of low heat conductivity of the coating and the temperature is gradually lowered within the base 32 to approach to some extent a temperature 40 of a cooling air 42 flowing on the opposite side of the base. However, if an adhesive incrustation 37 such as an oxidized film is accumulated on the surface of the base 32 by the water spray, then the temperature distribution will be shown by broken lines in Fig. 6. Namely, since the adhesive film 37 has a very low heat conductivity as in the coating 30 on the cooling side and the cooling effect of the cooling air 42 degrades, the temperature 41 of the base 32 on the cooling side becomes higher. On the cooling side surface of the base 32, a temperature difference $\Delta T$ is generated between the place where the adhesive incrustation is present and the place where the oxidized film is relatively thin. This temperature difference causes a large thermal stress to be generated in the cooling side surface of the base 42, and causes cracks 35 (Fig. 5) to be generated from, for example, sharp corner portions of the cooling air holes. Also, the temperature of the base 42 becomes higher as indicated by broken lines, and the part where the adhesive incrustation is present is likely to be excessively heated. In view of this, according to the present invention, as shown in Fig. 7, the alloy material 25 which is superior in corrosion resistant characteristics at high temperature is spray welded on the surface of the base 32 along which the cooling air 42 flows, so that the adhesive incrustation 37 is completely prevented from adhering onto the surface of the base 32 to thereby preventing the generation of the thermal stress in the base 32. The alloy material 25 is made of metallic compositions and has substantially the same heat conductivity as that of the base 32. Assuming that the combustion gas temperature 38 and the surface temperature 39 of the coating 30 be equal to those of the conventional structure, respectively, the temperature line 43 is the same as the solid line in Fig. 6 where no adhesive incrustation is present. Thus, the prevention of the adhesive incrustation from adhering will reduce the thermal stress.

In accordance with the temperature distribution shown in Fig. 7, since the temperature of the base 32 is low and the temperature of the cooling side surface is not locally changed, the thermal stress is suppressed.

In the other hand, in the case where the rear surface of the ceramic coating 30 is cooled with water, a problem of peeling will be raised.

In order to solve such a problem, various experiments were conducted as to an oxide consisting mainly of $ZrO_2$ system material and two or three other oxides. Incidentally, there is no particular limit to the forming method of the coating for the liner cap according to the present invention. However, it is preferable to employ a high output spray welding method, in particular, a plasma spray welding method from an economical point of view. Table 1 shows results of the experiments conducted by the present inventors. The coating was formed through the plasma spray welding. As an experimental method, a repeated test of a heat cycle was conducted in which the ceramic coating was held at 800°C for 15 minutes and thereafter was dipped into the water at a temperature of 25 to 30°C (for 15 s) and also a repeated test of a heat cycle was conducted in which the coating surface was heated by an oxygen-acetylene mixture gas flame up to 1,000°C for 5 s and thereafter was cooled (for 20 s) by removing the gas flame. In the test using the gas flame, the compression air kept at room temperature was always sprayed onto the rear surface side of the member at a pressure of 3 Kg/cm$^2$ (294 KPa). In any of the coatings, a metallic alloy layer was interposed between the member and the oxide layer.

TABLE 1

| material and composition of ceramic coatings | the number of the tests reaching damages of the coatings | |
|---|---|---|
| | 800°C $\longleftrightarrow$ water cooling | 1000°C $\longleftrightarrow$ air cooling |
| $ZrO_2$ — 2% $Y_2O_3$ | 500 | 2000 |
| $ZrO_2$ — 8% $Y_2O_3$ | 500 | 2000 |
| $ZrO_2$ — 20% $Y_2O_3$ | 400 | 2000 |
| $ZrO_2$ — 4% CaO | 400 | 1500 |
| $ZrO_2$ — 8% CaO | 400 | 1500 |
| $ZrO_2$ — 8% MgO | 300 | 1500 |
| $ZrO_2$ — 24% MgO | 300 | 1000 |
| $Al_2O_3$ | 50 | 100 |
| $Al_2O_3$ — 28% MgO | 50 | 80 |
| $Al_2O_3$ — 23% $SiO_2$ | 20 | 80 |

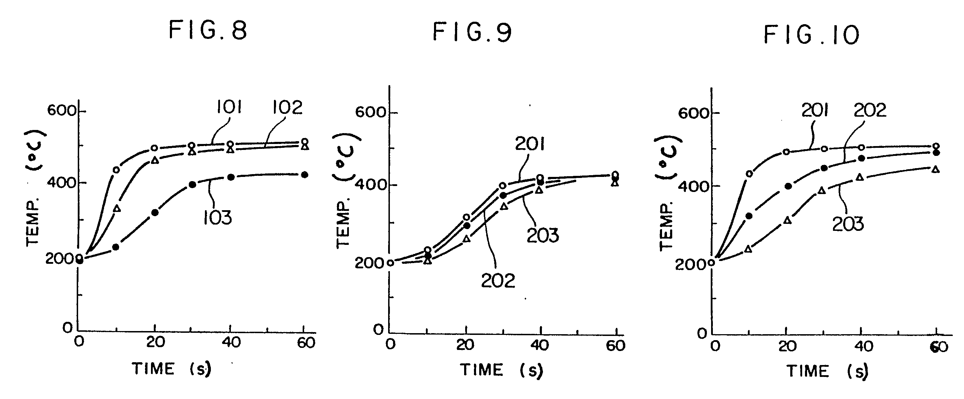

As a result of such heat cycle tests, in any method, the $ZrO_2$ oxides was superior in durability to $Al_2O_3$ system oxide. Among the $ZrO_2$ system oxides, as a result of reviews of the addition of various kinds of stabilizers, it was found that the addition of $Y_2O_3$ was most excellent. Subsequently, with respect to the members having such ceramic coatings, studies were made as to the temperature change of the members in the case where the thermal shock such as a gas flame was effected. As an experimetal method, the surface of the member was abruptly heated by the gas flame, whereupon the temperature change of the rear surfaced of the member was measured. Incidentally, the rear surface was cooled by the compression air as in the former case. One example of the result thereof is shown in Fig. 8. In Fig. 8, a reference numeral 101 represents a member to which no ceramic coating was applied, reference numeral 102 represents a member to which an $Al_2O_3$ coating was applied and reference numeral 103 represents a member to which a $ZrO_2$ coating was applied. From the relationship between the temperature of the rear surface of the member and the time, it was apparent that the temperature elevation gradient of the $ZrO_2$ system oxide coated member was most gentle. The results were simulated to the temperature change condition of the member in the case where the combustion gas flame locally approached the combustion side surface of the liner cap. In the case where a $ZrO_2$ system oxide having a lower heat conductivity is applied to the member, even if a rapid thermal change occurs, the temperature change will be very gentle in comparison with the member having no coating.

Figs. 9 and 10 shows results of measurement of the temperature distribution of the rear surface of the member in the same heating manner as in the previous test. Fig. 9 is concerned with the member coated with a $ZrO_2$ system oxide, and Fig. 10 is concerned with the member having no ceramic coating. In either case, a curve designated by reference numeral 201 represents a temperature of the rear surface portion corresponding to the gas flame, a curve 202 designated by reference to numeral 202 represents a temperature at a part spaced apart from the center of the gas flame by 10 mm, and a curve designated by numeral 203 represent a temperature at a part spaced apart from the center of the gas flame by 20 mm. As is apparent from the results, in the member having no coating, a temperature elevation of the rear surface of the member caused by the gas flame heating remarkably takes place at the restricted part from the heating center. On the other hand, in the member with the $ZrO_2$ system, oxide coating, the temperature elevation is gentle and the influence of the heating is not concentrated on the center of heating. From the results, it will be understood that, even if a rapid thermal change is locally generated, it is possible to prevent the local temperature elevation of the member of the liner cap in accordance with the present invention in comparison with the conventional liner cap having no coating. As well as the above-described studies, the infleunce exerted by the thickness of the coating of ceramic was examined. As a result, it was found that in the liner cap according to the invention, substantially the same results as shown in Figs. 8 to 10 could be obtained by forming a $ZrO_2$ oxide system coating of about 0.1 mm thickness or more. On the other hand, in order to sufficiently maintain the effect of the present invention, as is apparent from the various thermal cycle tests as shown in Table 1, it is preferable that the thickness thereof be less than about 0.5 mm, more preferably, about 0.3 mm. Also, with the liner cap of the present invention, as is apparent from Figs. 8 to 10, an addition effect, that is, a heat shield effect in which the coating reduces uniformly a temperature of the member as a whole as well known in the art may be expected.

Studies as to the surface treatment of the cooling side surface of the liner cap have been made. In the liner cap according to the present invention, apart from the point of view of thermal conductivity, since the member per se is kept at a high temperature, an influence of corrosive formation due to various impurities contained in the combustion gas, an oxidation of the member surface due to the adhesion of water mixed from the water spray nozzles, and an influence exerted by impurities contained in the water must be sufficiently taken into consideration. In particular, the adhesion of the corrosive formation due to the high temperature oxidation or impurities contained in the combustion gas and the water will adversely affect the cooling effect with the member surface of the cooling side. Further, if such a phenomenon would take place in the small holes or narrow clearance for air cooling, the cooling effect thereat would be degraded. If the cooling effect would be thus reduced, in particular, locally take place, the local temperature elevation of the member would be caused to shorten the service life of the liner cap. According to the present invention, it is therefore very important to select material for coatings of the cooling side surface, taking the above-noted defects into consideration. Therefore, studies have been made as to the coatings of various metallic materials having a high thermal conductivity in comparison with ceramic material. High temperature oxidation and high temperature corrosion experiments of various materials have been conducted. The high temperature oxidation experiment was such that test pieces were held at 800°C for 100 hours and the high temperature corrosion experiment was such that the test pieces were held at 760°C in a molten salt of 25% NaCl — 75% $Na_2SO_4$ for 100 hours. In case of metallic materials such as Al, Fe, Ni and the like, from the results of the oxidation and corrosion tests, the coatings were considerably damaged. In case of alloy materials such as Fe-Al, N-Al, Ni-Cr and the like, although the damage appeared small from the visual observation, from the result of observation of the formation in cross-section, an internal damage in each test was found. On the other hand, in case of alloy materials such as Ni-Cr-Al, Co-Cr-Al, Ni-Cr-Al-Y, Co-Cr-Al-Y, Co-Ni-Cr-Al-Y and the like, from results of either appearance observation or internal formation observation, no damage was found in the coatings. As such experimental suggests, in the liner cap according to the present invention, it is necessary to form coatings of the various alloy system materials which are superior in high temperature oxidation and high temperature oxidation and high temperature corrosion characteristics as described above. However, the present invention is not limited to a specific composition range for the alloy materials. As well as the above-described alloy materials, any alloy system material to which elements such as Ta, Hf, Si and the like are added may be similarly used. The surface treatment effect of the cooling side surface of the liner cap according to the present invention with the coating of alloy material which is superior in high temperature oxidation and high temperature corrosion characteristics has been examined. As a testing manner, the surface of the member coated with a coating was cooled with compression air, and the surface of the member having no coating was heated by oxygen-acetylene mixture gas flame, and a temperature of the surface on the heated side was measured with a radiation pyrometer. The test was conducted under the constant condition of heating and cooling and the temperature of the member reached an equilibrium at 500°C. Thereafter, water was sprayed on the surface having the coating. At this time, the change of the member temperature with respect to an elapse of time was measured. For comparison, like tests were conducted as to the member having no coating. Incidentally, since a burner for heating having a much greater diameter than that of the water spray nozzle was used, an influence of the temperature distribution was negligible. As a result in the member having no

0 149 474

coating, a temperature at a part corresponding to the water spray nozzle was rapidly decreased. On the other hand, in the member having the coating, a temperature change was gentle. Thus, it was found that in the member coated with the alloy material, even if a local water collision took place, the temperature of the member was hardly changed in a local and rapid manner. As a result of studies of such effects with the thickness of the coating being changed in variety, it was found that the thickness of about 0.1 mm or more was desirable and more preferably, the thickness was about 0.3 mm. Also, if the thickness of the coating was too large, the air cooling effect against the member was reduced, and invertly, the temperature of the member per se was elevated. Also, in this case, a residual stress generated in the coating upon forming the coating was increased, and a damage such as peeling of the coating would be generated due to the thermal cycle of repeating the work and stop of the gas turbine. Therefore, in view of these defects, and from an economical point of view in forming a ceramic coating, it is preferable that the thickness of the coating be less than 0.5 mm. Based upon the above-described studies, such an experiment was conducted that a test piece having a stress concentration portion was made and was provided on its combustion side surface with $ZrO_2$ system oxide and on its cooling side surface with a coating of Ni—Cr—Al—Y alloy, simulating to the effect of the actual liner cap. The test piece was provided in the midportion with a hole in the form of a slit which was 1 mm width and 10 mm long, so that a stress would be concentrated on its corner portions. The test piece was heated by the above-described gas flame and was cooled by compression air. The water spray was applied in the same manner as described above. As the temperature change of the member, the temperature on the cooling side surface was measured. After the temperature of the cooling side surface of the member reached the equilibrium at 700°C, the water spray was supplied to the corner portions of the slit hole from a nozzle having a diameter of 5 mm, for 30 s. Then, the water spray was stopped and the gas flame was moved apart from the test piece and cooled. Such a cycle was repeated. As a result, in the piece having no coating, a crack was generated at the corner portion of the slit by 80 repeated cycles. On the other hand, in the test piece having coatings on both surfaces of the cooling and combustion sides, even after about 500 repeated cycle tests, no damage was found in the test piece by appearance observation or cross-sectional inspection. Incidentally, in the test piece having a coating on either the combustion side surface or the cooling side surface, a crack was generated by about 150 cyclic tests. Thus, according to the liner cap of the present invention, the effect of the combustion and cooling sides were combined with each other, so that a remarkable resultant effect could be obtained. Therefore, in the liner cap according to the present invention, it is necessary to provide coatings on both sides. Such a method of forming the coatings have already been explained. As the effect of the use of the plasma spray welding for forming the coating on the cooling side surface, there is an advantage in that the coating becomes a high density coating to reduce a thermal resistance degrading the air cooling effect, and a corrugation in order of several microns on the coating surface which is inherent in the spray welded layer may increase an effective surface area for the air cooling. Furthermore, such an corrugations may serve to diffuse an energy of water collision and reduce the influence thereof.

The present invention has been described with reference to the shown embodiment but is not limited thereto. The present invention is applicable to the liner sleeve body 5. In case of the application of the invention to the sleeve body, there is an advantage in that when the gas turbine is installed in a coastal area, salt components are included in cooling air and the sleeve body is likely to be corroded in such an ambient atmosphere, a corrosion may be prevented.

As described above, according to the present invention, since a ceramic coating is provided on a surface on the flame radiation side, a temperature elevation may be suppressed, and since a coating made of corrosion resistant material is applied to the rear surface, it is possible to prevent adhesive layers of lower heat conductivity from being formed, whereby a crack may be prevented from being generated.

## Claims

1. A combustion apparatus of a gas turbine comprising an inner sleeve (4) made of metal and having a number of cooling air holes (2) in its wall surface, a fuel nozzle for supplying said inner sleeve (4) with fuel, and an outer sleeve (5) surrounding said inner sleeve (4) for defining an air passage with said wall surface of said inner sleeve (4), wherein a ceramic coating (30) is provided on the part of said inner sleeve (4), which is subjected to a flame radiation heat, and a coating (21) made of corrosion resistance material which is superior in high temperature corrosion resistant characteristics to a base metal forming said inner sleeve (4) is provided on the opposite surface of said inner sleeve (4), characterized in that said corrosion resistance material is a metal alloy.

2. A combustion apparatus as set forth in claim 1, wherein said inner sleeve (4) comprises a cylindrical liner portion and a liner cap (10) connected to an end face of said liner portion, and said ceramic coating and said coating of the resistant metal material are applied to said liner cap (10) alone.

3. A combustion apparatus as set forth in claim 1, wherein said ceramic coating is made of oxide composed essentially of $ZrO_2$.

**Patentansprüche**

1. Gasturbinenbrennkammer, umfassend eine Innenbüchse (4) aus Metall mit einer Anzahl Kühlluftöffnungen (2) in ihrer Wandfläche, eine Treibstoffdüse, die der Innenbüchse (4) Treibstoff zuführt, und eine Außenbüchse (5), die die Innenbüchse (4) unter Bildung eines Luftkanals mit der Wandfläche der Innenbüchse (4) umgibt, wobei auf demjenigen Teil der Innenbüchse (4), der einer Flammenstrahlungswärme ausgesetzt ist, eine Keramikbeschichtung (30) vorgesehen ist und auf der entgegengesetzten Fläche der Innenbüchse (4) eine Beschichtung (21) aus einem korrosionsbeständigen Werkstoff vorgesehen ist, der gegenüber einem die Innenbüchse (4) bildenden Trägermetall bessere Hochtemperatur-Korrosionsbeständigkeitseigenschaften aufweist, dadurch gekennzeichnet, daß der korrosionsbeständige Werkstoff eine Metallegierung ist.

2. Gasturbinenbrennkammer nach Anspruch 1, wobei die Innenbüchse (4) einen zylindrischen Auskleidungabschnitt und einen Auskleidungsverschluß (10), der mit einer Endfläche des Auskleidungsabschnitts verbunden ist, aufweist, und wobei die Keramikbeschichtung und die Beschichtung aus dem beständigen Metall nur auf den Auskleidungsverschluß (10) aufgebracht sind.

3. Gasturbinenbrennkammer nach Anspruch 1, wobei die Keramikbeschichtung aus einem Oxid besteht, das im wesentlichen $ZrO_2$ ist.

**Revendications**

1. Appareil à combustion pour une turbine à gaz, comprenant un manchon intérieur (4) réalisé en métal et comportant un certain nombre de trous (2) de passage de l'air de refroidissement ménagés dans la surface de sa paroi, une buse à combustible servant à alimenter en combustible ledit manchon intérieur (4), et un manchon extérieur (5) entourant ledit manchon intérieur (4) de manière à définir un passage d'air en association avec ladite surface de paroi dudit manchon intérieur (4), et dans lequel un revêtement céramique (30) est prévu sur la partie dudit manchon intérieur (4), qui est soumise à l'action de la chaleur de rayonnement des flammes, et un revêtement (21) réalisé en un matériau, qui résiste à la corrosion et présente une caractéristique de résistance à la corrosion aux températures élevées, supérieure à un métal de base constituant ledit manchon intérieur (4), est prévu sur la surface opposée dudit manchon intérieur (4), caractérisé en ce que ledit matériau resistant à la corrosion est un alliage métallique.

2. Appareil de combustion selon la revendication 1, dans lequel ledit manchon intérieur (4) comporte un élément d'habillage cylindrique et un chapeau (10) pour cet élément d'habillage, raccordé à une face d'extrémité dudit élément d'habillage, et ledit revêtement céramique et ledit revêtement réalisé en un matériau métallique résistant sont appliqués uniquement sur ledit chapeau (10) de l'élément d'habillage.

3. Appareil à combustion selon la revendication 1, dans lequel ledit revêtement céramique est réalisé en un oxyde constitué essentiellement par du $ZrO_2$.

# F I G. I

FIG. 2

FIG. 3

2

# F I G. 4

# F I G. 5

# F I G. 6

# F I G. 7

FIG. 8    FIG. 9    FIG. 10

0 149 474